**Europäisches Patentamt**

**European Patent Office**

**Office européen des brevets**

(19)

(11) **EP 1 531 468 A1**

(12) **EUROPÄISCHE PATENTANMELDUNG**

(43) Veröffentlichungstag:
**18.05.2005 Patentblatt 2005/20**

(51) Int Cl.⁷: **G11B 20/12**, G06F 3/06

(21) Anmeldenummer: **03025993.1**

(22) Anmeldetag: **14.11.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(71) Anmelder: **Kastl, Oliver
82054 Sauerlach (DE)**

(72) Erfinder: **Kastl, Oliver
82054 Sauerlach (DE)**

(74) Vertreter: **Kailuweit, Frank, Dr. Dipl.-Ing.
Patentanwälte Kailuweit & Uhlemann,
Bamberger Strasse 49
01187 Dresden (DE)**

(54) **Verfahren, Computerprogrammprodukt und Vorrichtung zur Speicherung von Daten und zur Verarbeitung solcher Daten**

(57) Die Erfindung betrifft Verfahren, Computerprogrammprodukte und Vorrichtungen zur verteilten Speicherung von Daten und zur Verarbeitung solcher Daten.

Das erfindungsgemäße Verfahren zur verteilten Speicherung von Daten ist dadurch gekennzeichnet, dass eine Gesamtheit von Daten in eine Mehrzahl unterbrechungsfrei gespeicherter Teilbereiche aufgeteilt wird, jeder Teilbereich vom Quelldatenträger gelesen und unterbrechungsfrei auf einen oder je einen Zieldatenträger geschrieben wird.

Das erfindungsgemäße Verfahren zur Verarbeitung von Daten, die in mehrere Teilbereiche aufgeteilt sind ist dadurch gekennzeichnet, dass für einen vorgegebenen Datenabschnitt festgestellt wird, in welchem Teilbereich sich dieser befindet, die Position des Datenabschnitts innerhalb des betreffenden Teilbereichs festgestellt wird, der Datenabschnitt aus dem Teilbereich gelesen und gegebenenfalls entschlüsselt wird.

Zur Durchführung jedes der erfindungsgemäßen Verfahren können diese computerimplementiert sein, indem sie auf einer programmtechnisch eingerichteten Datenverarbeitungseinrichtung ausgeführt werden. Hierzu wird vorteilhaft ein Computerprogrammprodukt verwendet, das eines oder mehrere der erfindungsgemäßen Verfahren ausführt, wenn es auf der programmtechnisch eingerichteten Datenverarbeitungseinrichtung abläuft.

EP 1 531 468 A1

**Beschreibung**

Die Erfindung betrifft Verfahren, Computerprogrammprodukte und Vorrichtungen zur verteilten Speicherung von Daten und zur Verarbeitung solcher Daten.

Zur bestimmungsgemäßen Verwendung von Daten ist es oftmals erforderlich, dass diese auf dem Originaldatenträger (Quelldatenträger) vorliegen oder, wenn sie auf einem Ersatzdatenträger (Zieldatenträger) gespeichert sind, zumindest die Reihenfolge der Daten auf dem Ersatzdatenträger der auf dem Originaldatenträger entspricht. Darüber hinaus enthalten Originaldatenträger neben den Nutzdaten oftmals Zusatzdaten, die für die bestimmungsgemäße Verwendung der Nutzdaten nicht benötigt werden, deren Fehlen auf einem Ersatzdatenträger jedoch zur Unbrauchbarkeit desselben führt. Daher müssen auch diese Zusatzdaten auf den Ersatzdatenträger übertragen werden.

Wird eine dieser Bedingungen, wie beispielsweise nach der Übertragung von Daten von einem Datenträger auf einen anderen durch herkömmliche Verfahren, nicht erfüllt, so sind die Daten nicht verwendbar, d.h. die einzelnen Dateien sind zwar nach wie vor lesbar, aufgrund der vom Originaldatenträger abweichenden Reihenfolge auf dem Ersatzdatenträger oder des Fehlens der Zusatzdaten jedoch nicht für den vorgesehenen Zweck verwendbar. Originaldatenträger, deren Verwendbarkeit für den vorgesehenen Zweck (Lauffähigkeit) von der Korrektheit der Datenstruktur und/oder der Vollständigkeit der Daten abhängt, sind im Allgemeinen Nur-Lese-Speichermedien, wie CD-ROMs, DVD-ROMS etc.

Um solche, von dem Originaldatenträger auf einen Ersatzdatenträger, wie einmalig oder mehrfach beschreibbare CDs oder DVDs, beispielsweise zu Sicherungszwecken übertragenen Daten dennoch nutzen zu können, besteht die Möglichkeit, die Daten im RAW-Modus vom Originaldatenträger auf den Ersatzdatenträger zu übertragen, d.h. bitweise zu kopieren. Nach diesem Verfahren hergestellte Kopien des Originaldatenträgers sind im Allgemeinen lauffähig, da sowohl die Reihenfolge der Daten mit denen des Originaldatenträgers übereinstimmt als auch alle Zusatzdaten mit übertragen werden.

Eine andere Möglichkeit, solche Daten von einem anderen als dem Originaldatenträger nutzen zu können, besteht in der Herstellung einer Imagedatei. Eine Imagedatei stellt einen Datencontainer dar, der den gesamten Inhalt des Quelldatenträgers enthält, wobei auch die ursprüngliche Reihenfolge der Daten erhalten bleibt. Die Imagedatei ist jedoch für sich genommen nicht lauffähig. Um die in der Imagedatei enthaltenen Daten in der vorgesehenen Weise nutzen zu können, können diese aus der Imagedatei einerseits mittels eines geeigneten Kopierverfahrens, beispielsweise durch ein Brennprogramm, auf einen gleichartigen Datenträger übertragen werden, wodurch man wiederum eine lauffähige Kopie erhält.

Eine andere Möglichkeit besteht darin, die Imagedatei mittels zusätzlicher Maßnahmen lauffähig zu machen. Dazu muss der Inhalt der Imagedatei auf einem beliebigen Datenträger, beispielsweise der Festplatte eines Computers, vorliegen. Weiterhin muss in der Datenverarbeitungseinrichtung, beispielsweise einem Computer, ein virtueller Gerätetreiber oder ein funktionsgleiches Computerprogrammprodukt installiert sein.

Gerätetreiber sind installierbare Systemprozesse, d.h. Computerprogrammprodukte, die Nutzerbefehle in Kommandos umsetzen, die für eine bestimmte Hardwarekomponente verständlich und ausführbar sind. Damit das Betriebssystem der Datenverarbeitungsanlage auf die Hardwarekomponente zugreifen kann, meldet der Gerätetreiber die Hardwarekomponente beim Betriebssystem mit gerätetypischen Parametern an, so dass nur Daten und Befehle an die Hardwarekomponente übermittelt werden, die von dieser auch verarbeitet werden können, beispielsweise Videodaten an einen Monitor, Druckdaten an einen Drucker usw..

Virtuelle Gerätetreiber sind gleichfalls installierbare Systemprozesse, d.h. Computerprogrammprodukte, wobei jedoch keine echte Hardwarekomponente angesteuert wird, sondern eine bestimmte Datenmenge, beispielsweise in Form einer Imagedatei, verwaltet wird, deren Name und Speicherort dem Treiber zuvor durch den Nutzer bekannt gemacht wurde. Dennoch wird am Betriebssystem eine Hardwarekomponente, beispielsweise ein virtuelles CD-ROM-Laufwerk oder DVD-ROM-Laufwerk, angemeldet, so dass das Betriebssystem aus der Imagedatei Daten lesen kann, die es von einer solchen Hardwarekomponente erwartet. Die vor der Weitergabe an das Betriebssystem notwendige Extraktion der durch das Betriebssystem von dem virtuellen Laufwerk angeforderten Daten aus der Imagedatei wird ebenfalls durch den virtuellen Gerätetreiber realisiert.

Bekannt sind Verfahren zur Datenträgerverschlüsselung, bei denen der Inhalt eines Datenträgers oder ein Teil eines Datenträgers verschlüsselt wird. Eine hierfür gebräuchliche Methode besteht darin, dass die Verschlüsselung und die Entschlüsselung das gesamte Dateisystem betrifft und damit vom Betriebssystem organisiert wird.

Ein anderes bekanntes Verfahren sieht vor, dass der Benutzer entscheidet, welcher Teil des Datenträgers verschlüsselt werden soll, um sensitive Daten zu schützen. Hierbei werden ebenfalls mit Hilfe virtueller Gerätetreiber virtuelle Laufwerke angelegt und am Betriebssystem angemeldet. Der Inhalt dieser virtuellen Laufwerke befindet sich ebenfalls in einem Datencontainer und ist verschlüsselt. Zum Zugriff auf die gespeicherten Daten muss das virtuelle Laufwerk angemeldet sein und der Benutzer muss sich durch eine Passphrase, einen Dongle oder ähnliche Mittel identifizieren.

Nach der Anmeldung am Betriebssystem sieht ein verschlüsseltes virtuelles Laufwerk für den Benutzer wie ein gewöhnliches Laufwerk aus und es können Daten darauf gespeichert werden. Jeder Lesevorgang auf dem virtuellen Laufwerk bewirkt eine Entschlüsselung der angeforderten Daten und jeder Schreibvorgang bewirkt, daß die zu schreibenden Daten verschlüsselt werden. Dieser Ansatz wird "transparente Verschlüsselung" genannt. Hierdurch sind die Daten stets in einer sicheren, verschlüsselten Form gespeichert, erscheinen jedoch sowohl für den Benutzer als auch für die Anwendung, mit der Sie sie verwendet werden, beispielsweise einen Dateimanager oder eine Textverarbeitung, dennoch in ihrer natürlichen, unverschlüsselten Form.

Digital Versatile Discs (DVDs) gibt es als Nur-Lese-Speicher (DVD-ROM), einmal beschreibbare (DVD-R) oder mehrfach beschreibbare (wiederbeschreibbare) Datenträger (DVD-RW, DVD+RW), mit einer oder zwei beschreibbaren Seiten und mit einer oder zwei beschreibbaren Schichten (Layer) je beschreibbarer Seite, wodurch bei den einzelnen Typen unterschiedliche Kapazitäten erreicht werden. Heutige beschreibbare oder wiederbeschreibbare Rohlinge (DVD-RW, DVD+RW) enthalten einen Layer je beschreibbarer Seite, wogegen viele DVD-ROMs zwei Layer je beschreibbarer Seite aufweisen. Daher übersteigt die Kapazität solcher, für den Vertrieb von Software industriell gefertigter DVD-ROMs die der gebräuchlichen Rohlinge, so dass eine 1:1-Kopie der Daten des Originaldatenträgers auf einen solchen Rohling nicht möglich ist, ohne die Daten zu komprimieren oder zu verändern.

Das Komprimieren oder Verändern dieser Daten ist aber oftmals unerwünscht (Qualitätsverlust bei Video- oder Audiodaten) oder sogar unmöglich (Computerdaten, bereits komprimiertes Datenmaterial).

Zwar ist es möglich, die Daten zu "splitten", d. h. einen Teil der Daten auf den einen, und den Rest der Daten auf einen anderen Rohling zu schreiben. Diese Lösung ist jedoch unbefriedigend, da hierbei die Datenstruktur des Originalmediums verloren geht, oder sehr große Dateien geteilt werden müssten. Eine bitgenaue 1:1-Kopie ist nicht möglich.

Die vorliegende Erfindung stellt sich die Aufgabe, Verfahren zur verteilten Speicherung von Daten und zur Verarbeitung solcher Daten sowie ein Computerprogrammprodukt und eine Vorrichtung zur Durchführung der Verfahren vorzuschlagen.

Erfindungsgemäß wird die Aufgabe gelöst durch ein Verfahren mit den Merkmalen des Anspruchs 1, ein Verfahren mit den Merkmalen des Anspruchs 10 sowie Computerprogrammprodukte mit den Merkmalen der Ansprüche 14 bis 16 und eine programmtechnisch eingerichtete Datenverarbeitungseinrichtung mit den Merkmalen des Anspruchs 17; vorteilhafte Weiterbildungen sind Gegenstand von Unteransprüchen.

Dabei sollen unter dem Begriff "programmtechnisch eingerichtete Datenverarbeitungseinrichtung" elektronische Geräte wie Computer, Abspielgeräte und Recorder für einfach oder mehrfach beschreibbare Datenträger wie CD oder DVD, Spielekonsolen usw. jeweils mit oder ohne Festplatte, mit oder ohne TV-, Satelliten- oder Radio-Receiver usw. verstanden werden.

Die Begriffe "virtueller Gerätetreiber" und "Computerprogrammprodukt" im Sinne der vorliegenden Erfindung sollen jede Programmsteuerung und jedes Computerprogrammprodukt umfassen, die bzw. das in der Lage ist, eine Vorrichtung zur Durchführung mindestens eines der beanspruchten Verfahren zu befähigen, also beispielsweise auch die Firmware oder sonstige Betriebssoftware von programmtechnisch eingerichteten Datenverarbeitungseinrichtungen, nämlich elektronischen Geräten wie Computern, Abspielgeräten und Recordern für CD oder DVD, Spielekonsolen usw. jeweils mit oder ohne Festplatte, mit oder ohne TV-, Satelliten- oder Radio-Receiver usw.

Der im Folgenden verwendete Begriff "Teilbereich" bezieht sich auf eine wählbare Teilmenge vorhandener Daten, die als Einheit von einem Quelldatenträger auf einen Zieldatenträger übertragen wird, beispielsweise der Dateninhalt einer bestimmten Anzahl von Sektoren eines Datenträgers.

Der Begriff "Datenabschnitt" hingegen bezieht sich auf eine wählbare Datenmenge, die gelesen werden soll, beispielsweise eine Datei oder ein Teil einer Datei.

Die Formulierung "unterbrechungsfrei gespeichert" soll dabei lediglich bedeuten, dass alle zwischen Anfangs- und Endadresse des jeweiligen Teilbereichs oder Datenabschnitts befindlichen Daten zu dem jeweiligen Teilbereich bzw. Datenabschnitt gehören müssen. Dabei kann sich ein "unterbrechungsfrei gespeicherter" Teilbereich durchaus über mehrere Layer oder in sonstiger Weise physisch getrennte Bereiche eines Datenträgers erstrecken. In gleicher Weise kann sich ein "unterbrechungsfrei gespeicherter" Datenabschnitt über mehrere Teilbereiche erstrecken.

Das erfindungsgemäße Verfahren zur verteilten Speicherung von Daten ist dadurch gekennzeichnet, dass eine Gesamtheit von auf einem Quelldatenträger gespeicherten Daten in eine Mehrzahl unterbrechungsfrei gespeicherter Teilbereiche wählbarer Größe aufgeteilt wird, jeder Teilbereich vom Quelldatenträger gelesen wird und jeder Teilbereich unterbrechungsfrei auf einen oder je einen wählbaren Zieldatenträger geschrieben wird.

In einer Ausgestaltung des erfindungsgemäßen Verfahrens wird jeder Teilbereich bitweise identisch auf den oder die Zieldatenträger geschrieben. Vorteilhaft an dieser Ausgestaltung ist die unmittelbare Zugänglichkeit der Daten und ihre Verwendbarkeit im Zusammenhang mit programmtechnisch eingerichteten Datenverarbeitungseinrichtungen, die keine Möglichkeit zur Entschlüsselung bieten.

In einer anderen Ausgestaltung des erfindungsgemäßen Verfahrens wird jeder Teilbereich vor dem Schreiben auf den oder die Zieldatenträger verschlüsselt. Diese Ausgestaltung ist besonders vorteilhaft für die verteilte Speicherung sicherheitsrelevanter Daten, da diese nur von autorisierten Personen benutzt werden können.

Zunächst werden die auf dem Quelldatenträger befindlichen Daten in mindestens zwei unterbrechungsfrei gespeicherte Teilbereiche wählbarer Größe aufgeteilt. Jeder so festgelegte Teilbereich, der kleiner oder gleich der Kapazität des Zieldatenträgers ist, wird gelesen, wobei der eingelesene Teilbereich in sich geschlossen ist, d.h. zwischen den eingelesenen Daten darf sich keine Lücke befinden, die auf dem Quelldatenträger nicht vorhanden ist. Alle in dem Teilbereich des Quelldatenträgers befindlichen Daten einschließlich eventuell vorhandener Lücken müssen gelesen werden. An den Lesevorgang anschließend oder parallel dazu werden die gelesenen Daten auf einen Zieldatenträger geschrieben, und zwar vollständig und bitweise in der exakt gleichen Reihenfolge, wie sie auf dem Quelldatenträger vorliegen.

In einer Ausgestaltung des erfindungsgemäßen Verfahrens wird jeder Teilbereich des Quelldatenträgers auf einen anderen Zieldatenträger geschrieben. Diese Variante ist insbesondere dann von Vorteil, wenn die verwendeten Zieldatenträger über eine geringere Speicherkapazität verfügen als der Quelldatenträger. Anwendungsbeispiele hierfür sind die Anfertigung von Sicherungskopien großer Quelldatenträger auf zwei oder mehr Zieldatenträger, beispielsweise weil keine Zieldatenträger ausreichender Speicherkapazität zur Verfügung stehen oder das Betriebssystem der programmtechnisch eingerichteten Datenverarbeitungsanlage ein Dateisystem verwendet, das hinsichtlich der Größe der ansprechbaren Datenträger beschränkt ist. Dies ist beispielsweise bei dem in den Windows-Versionen 95, 98, ME und XP Home Edition verwendeten Dateisystem FAT32 der Fall, da ein Datenträger bzw. eine Partition dort nicht größer als 4 GB sein darf.

In einer anderen Ausgestaltung des erfindungsgemäßen Verfahrens werden alle Teilbereiche des Quelldatenträgers auf ein und denselben Zieldatenträger geschrieben. Diese Variante ist insbesondere dann von Vorteil, wenn der verwendete Zieldatenträger zwar über eine ausreichende Speicherkapazität verfügt, die verschiedenen Teilbereiche aber dennoch getrennt voneinander vorliegen sollen oder müssen, beispielsweise wenn eine Festplatte mehrere kleine Partitionen aufweist oder ein bestimmtes Ordnungsprinzip einzuhalten ist.

Vorteilhaft ist die Verwendung mindestens eines wechselbaren Speichermediums, wie beispielsweise einmalig oder mehrfach beschreibbare CDs oder DVDs als Zieldatenträger, da diese preiswert und leicht zu lagern sind und für die Speicherung kein wertvoller Platz auf der Festplatte benötigt wird.

Ebenfalls von Vorteil ist es, wenn mindestens ein Teilbereich in eine Imagedatei geschrieben wird, insbesondere, wenn als Zieldatenträger eine Festplatte verwendet werden soll. Unter Zuhilfenahme eines virtuellen Treibers kann diese Imagedatei wie ein wechselbares Speichermedium angesprochen werden, wobei jedoch wesentlich kürzere Zugriffszeiten erreicht und ständiges Wechseln des Datenträgers vermieden werden kann.

Die Arbeitsweise des virtuellen Gerätetreibers ist Gegenstand des Verfahrens zur Verarbeitung verteilt gespeicherter Daten gemäß Patentanspruch 10 und wird nachfolgend erläutert.

Das erfindungsgemäße Verfahren zur Verarbeitung von Daten, die in mehrere Teilbereiche aufgeteilt sind und deren Verwendbarkeit von ihrer Vollständigkeit sowie einer vorgegebenen Reihenfolge abhängt, ist dadurch gekennzeichnet, dass für einen vorgegebenen, beispielsweise von einer Anwendung angeforderten Datenabschnitt festgestellt wird, in welchem Teilbereich sich dieser befindet oder in welchen Teilbereichen sich Teile davon befinden, die Position des Datenabschnitts, beispielsweise durch Ermittlung der Anfangs- und Endadresse oder der Anfangsadresse und Länge des Datenabschnitts, innerhalb des betreffenden Teilbereichs festgestellt wird bzw. die Positionen der Teile des Datenabschnitts innerhalb der betreffenden Teilbereiche festgestellt werden, der Datenabschnitt aus dem Teilbereich gelesen und gegebenenfalls entschlüsselt wird bzw. die Teile des Datenabschnitts aus den Teilbereichen gelesen, gegebenenfalls entschlüsselt und zusammengefügt werden.

Datenabschnitte, die zu verarbeiten sind, sei es zyklisch (zeitgesteuert) oder auf Anforderung (ereignisgesteuert), werden zunächst auf der Ebene der Teilbereiche lokalisiert. Dabei wird der Teilbereich identifiziert, in welchem sich der gesuchte Datenabschnitt befindet. Befinden sich Teile des gesuchten Datenabschnitts in mehr als einem Teilbereich, beispielsweise weil durch die Festlegung der Teilbereiche auf dem Originalträger mitten in dem gesuchten Datenabschnitt der eine Teilbereich endete und ein anderer begann (z.B. layerübergreifender Datenabschnitt), so werden mehrere Teilbereiche identifiziert.

Anschließend muss, sofern der Datenabschnitt vollständig in einem Teilbereich enthalten ist, die Position des gesuchten Datenabschnitts innerhalb des identifizierten Teilbereichs ermittelt werden. Hierzu ist es vorteilhaft, die Anfangs- und Endadresse oder die Anfangsadresse und die Länge des Datenabschnitts innerhalb des betreffenden Teilbereichs festzustellen. Bei einem auf mehrere Teilbereiche verteilten Datenabschnitt wird für jeden betroffenen Teilbereich die Position des darin enthaltenen Teils des gesuchten Datenabschnitts festgestellt. Die Position des Datenabschnitts oder eines Teils des Datenabschnitts kann beispielsweise durch Ermittlung seiner Anfangs- und Endadresse oder der Anfangsadresse und der Länge des Datenabschnitts innerhalb des Teilbereichs festgestellt werden.

Zur Ermittlung des oder der Teilbereiche, in dem bzw. denen sich der gesuchte Datenabschnitt befindet und zur Ermittlung der Position des gesuchten Datenabschnitts innerhalb des Teilbereichs bzw. der Positionen der Teile des Datenabschnitts innerhalb der Teilbereiche, kann vorteilhaft eine Tabelle verwendet werden, die Adressangaben zu den Teilbereichen und den darin enthaltenen Datenabschnitten enthält und die bei der Übertragung der Teilbereiche vom Quelldatenträger auf den oder die Zieldatenträger angelegt worden sein kann.

Diese Tabelle kann in Form einer eigenständigen Datei abgelegt sein, auf die der virtuelle Gerätetreiber Zugriff hat.

Wenn die Position des gesuchten Datenabschnitts bekannt ist, wird dieser aus dem Teilbereich oder den Teilbereichen gelesen, gegebenenfalls entschlüsselt und steht zur Verarbeitung zur Verfügung. Bei einem auf zwei oder mehr Teilbereiche verteilten Datenabschnitt werden alle Teile des Datenabschnitts aus den entsprechenden Teilbereichen gelesen und gegebenenfalls entschlüsselt. Anschließend werden die Teile des Datenabschnitts zusammengefügt, so dass der ursprüngliche Datenabschnitt wie auf dem Originaldatenträger zur Verarbeitung zur Verfügung steht.

Zur Durchführung jedes der erfindungsgemäßen Verfahren können diese computerimplementiert sein, indem sie auf einer programmtechnisch eingerichteten Datenverarbeitungseinrichtung ausgeführt werden. Hierzu wird vorteilhaft ein Computerprogrammprodukt verwendet, das eines oder mehrere der erfindungsgemäßen Verfahren ausführt, wenn es auf der programmtechnisch eingerichteten Datenverarbeitungseinrichtung abläuft.

Nachfolgend wird die Erfindung anhand eines Ausführungsbeispiels näher erläutert.

Der Inhalt eines großen Quellmediums (z.B. Dual Layer DVD, ca. 8 GB groß) wird in einzelne Teilbereiche zerlegt, die auf mehrere Zieldatenträger (z.B. DVD-Rohlinge mit ca. 4 GB Größe) verteilt werden. In dem o. g. Beispiel würde auf dem Zieldatenträger 1 also im Wesentlichen der Inhalt des ersten Layers des Quelldatenträgers aufgezeichnet, während auf dem Zieldatenträger 2 der Inhalt des zweiten Layers des Quelldatenträgers gespeichert wäre.

Eine programmtechnisch eingerichtete Datenverarbeitungseinrichtung, z. B. ein Computer, ein DVD-Recorder oder eine Spielekonsole, fügt die Teile mittels eines virtuellen Gerätetreibers wieder zusammen, so dass ein "virtueller" Datenträger entsteht, der die Eigenschaften und Größe des Quelldatenträgers besitzt.

Dazu können in der programmtechnisch eingerichteten Datenverarbeitungseinrichtung entweder zwei DVD-Laufwerke eingebaut sein, so dass die komplette Kopie sofort verfügbar ist, oder es wird immer nur ein Zieldatenträger eingelegt, und das Abspielgerät fordert den Benutzer beim Zugriff auf die Daten auf, den passenden Zieldatenträger einzulegen. Hierzu kann der virtuelle Gerätetreiber beispielsweise eine Text- oder Sprachausgabe auf einer zum Abspielgerät gehörigen Anzeigeeinheit, z.B. einem Monitor, bzw. einer Sprachausgabeeinheit, z.B. einem Lautsprecher, erzeugen.

In einem weiteren Ausführungsbeispiel soll eine lauffähige Sicherheitskopie eines Computerspieles hergestellt werden. Ein Computerspiel bestehe aus mehreren Dateien, die auf einer Dual Layer DVD mit einer Speicherkapazität von ca. 8 GB gespeichert sind. Für die Funktion dieses Computerspieles ist es unbedingt notwendig, dass sich alle Dateien auf einer einzigen DVD befinden.

Heutige beschreibbare oder wiederbeschreibbare DVD-Rohlinge haben hingegen nur eine Kapazität von ca. 4.3 GB, so dass der Inhalt des Quellmediums nicht auf ein Zielmedium passt. Die Dateien nach herkömmlichen Verfahren auf mehrere Medien zu verteilen oder auf eine Festplatte zu kopieren ist nicht zweckmäßig, da dadurch die ursprüngliche Reihenfolge der Daten verändert würde und somit die Kopie nicht lauffähig wäre.

Zur Lösung dieses Problems wird in einer ersten Variante der Inhalt des Quelldatenträgers teilbereichsweise auf zwei (oder mehr) Zieldatenträger verteilt. Angenommen, der Quelldatenträger hat 4194304 Sektoren mit je 2048 Bytes (insgesamt 8 GB), so kann der Inhalt der Sektoren 0-2097151 (Teilbereich 1, Größe 4 GB) auf einen Zieldatenträger 1 und die Sektoren 2097152-4194303 (Teilbereich 2, Größe 4 GB) auf einen Zieldatenträger 2 kopiert werden.

In einer zweiten Variante werden die Teilbereiche nicht auf verschiedene, sondern auf denselben Datenträger, beispielsweise eine Festplatte übertragen. Eine Übertragung der Daten in mehreren Teilbereichen bietet sich beispielsweise dann an, wenn mehrere Festplatten geringer Kapazität vorhanden sind oder die Festplatte mehrere kleine Partitionen aufweist. Die Speicherung der Teilbereiche auf dem Zieldatenträger erfolgt beispielsweise in Form zweier Imagedateien. Bei dieser Variante würde beispielsweise der Inhalt der Sektoren 0-2097151 (Teilbereich 1, Größe 4 GB) in eine Imagedatei 1 und die Sektoren 2097152-4194303 (Teilbereich 2, Größe 4 GB) in eine Imagedatei 2 kopiert werden. Die Aufteilung der Sektoren kann bedarfsweise auch in einem anderen Verhältnis erfolgen.

Für sich gesehen wären die beiden Zieldatenträger bzw. Imagedateien ziemlich nutzlos.

Werden bei der ersten Variante die Zieldatenträger in je ein Laufwerk eingelegt und diese dem virtuellen Gerätetreiber bekannt gemacht bzw. werden dem virtuellen Gerätetreiber die Positionen der Imagedateien bekannt gemacht, fügt der virtuelle Gerätetreiber diese "virtuell" wieder zusammen, d.h. der virtuelle Gerätetreiber simuliert auf dem Abspielgerät ein Laufwerk mit einem virtuellen Datenträger, der wieder 8 GB groß ist und die originale Struktur besitzt. Dieser virtuelle Datenträger ist lauffähig.

Das Zusammenfügen der Teilbereiche aus den Zieldatenträgern oder Imagedateien zu einem virtuellen Datenträger geschieht folgendermaßen:

Der virtuelle Gerätetreiber empfängt von einer auf einem Computer ausgeführten Applikation oder der Betriebssoftware eines sonstigen Abspielgeräts eine Anfrage, einen Datenabschnitt von dem virtuellen Datenträger zu lesen. Der virtuelle Gerätetreiber muss nun den richtigen Zieldatenträger bzw. die richtige Imagedatei und die richtige Position des Datenabschnitts innerhalb des Zieldatenträgers bzw. der Imagedatei auswählen, um die Anfrage beantworten zu können. Eine Anfrage kann sich auch auf einen Datenabschnitt beziehen, der über mehrere Zieldatenträger bzw. Imagedateien verteilt ist.

Zur Ermittlung der Position des Datenabschnitts sind verschiedene Ansätze möglich, je nachdem ob die Teilbereiche auf den Zieldatenträgern bzw. in den Imagedateien die gleiche Größe besitzen oder nicht.

Bei gleicher Größe der Teilbereiche lässt sich das Positionsverhältnis von Teilbereich und virtuellem Datenträger durch die Formel

$$\text{Adresse } div \text{ TeilbereichGröße} = \text{TeilbereichNummer}$$

$$\text{Adresse } mod \text{ TeilbereichGröße} = \text{TeilbereichAdresse}$$

bestimmen, wobei div eine ganzzahlige Division und mod den Modulo bedeutet.

Weit flexibler ist allerdings das Anlegen einer Tabelle, in der die Anfangs- und Endadressen oder Anfangsadressen und Größe für jeden Zieldatenträger bzw. Teilbereich abgelegt werden, da hier die Zieldatenträger bzw. Teilbereiche verschieden groß sein können. Die Tabelle kann vorteilhaft in einer Datei abgelegt werden.

Wenn der Teilbereich identifiziert ist, der den gesuchten Datenabschnitt enthält und die Position des Datenabschnitts innerhalb des Teilbereichs, also des Zieldatenträgers bzw. der Imagedatei, festgestellt ist, wird der Datenabschnitt ausgelesen und an die anfordernde Applikation übergeben. Wenn sich die Anfrage auf einen Datenabschnitt bezieht, der über mehrere Teilbereiche verteilt ist, so werden zunächst die Teilbereiche identifiziert, in denen sich Teile des gesuchten Datenabschnitts befinden. Anschließend wird für jeden Teilbereich die Position des jeweiligen Teils des angeforderten Datenabschnitts ermittelt. Dann werden die Teile des Datenabschnitts aus den Teilbereichen gelesen und zusammengefügt und anschließend der gesamte Datenabschnitt an die anfordernde Applikation übergeben.

**Patentansprüche**

1. Verfahren zur verteilten Speicherung von Daten eines Quelldatenträgers auf einem oder mehreren Zieldatenträgern, bei dem

    - eine Gesamtheit von auf einem Quelldatenträger gespeicherten Daten in eine Mehrzahl unterbrechungsfrei gespeicherter Teilbereiche wählbarer Größe aufgeteilt wird,
    - jeder Teilbereich vom Quelldatenträger gelesen wird und
    - jeder Teilbereich unterbrechungsfrei auf einen oder je einen wählbaren Zieldatenträger geschrieben wird.

2. Verfahren nach Anspruch 1, **dadurch gekennzeichnet, dass** jeder Teilbereich bitweise identisch auf den oder die Zieldatenträger geschrieben wird.

3. Verfahren nach Anspruch 1, **dadurch gekennzeichnet, dass** jeder Teilbereich vor dem Schreiben auf den oder die Zieldatenträger verschlüsselt wird.

4. Verfahren nach einem der Ansprüche 1 bis 3, **dadurch gekennzeichnet, dass** alle Teilbereiche des Quelldatenträgers auf ein und denselben Zieldatenträger geschrieben werden.

5. Verfahren nach einem der Ansprüche 1 bis 3, **dadurch gekennzeichnet, dass** jeder Teilbereich des Quelldatenträgers auf einen anderen Zieldatenträger geschrieben wird.

6. Verfahren nach einem der vorhergehenden Ansprüche, **dadurch gekennzeichnet, dass** als Zieldatenträger mindestens ein wechselbares Speichermedium verwendet wird.

7. Verfahren nach einem der vorhergehenden Ansprüche, **dadurch gekennzeichnet, dass** mindestens ein Teilbereich in eine Imagedatei geschrieben wird.

8. Verfahren nach einem der vorhergehenden Ansprüche, **dadurch gekennzeichnet, dass** eine Adresstabelle erzeugt wird, die die Zuordnung zwischen den Zieldatenträgern und den darin enthaltenen Teilbereichen sowie zwischen den Teilbereichen und den darin enthaltenen Datenabschnitten enthält.

9. Verfahren nach Anspruch 8, **dadurch gekennzeichnet, dass** die Adresstabelle in einer Datei gespeichert wird.

10. Verfahren zur Verarbeitung einer in mindestens zwei separat gespeicherte Teilbereiche aufgeteilten Gesamtheit von Daten, bei dem

- für einen wählbaren Datenabschnitt ermittelt wird, in welchem Teilbereich sich dieser befindet oder in welchen Teilbereichen sich Teile davon befinden,
- die Position des Datenabschnitts innerhalb des betreffenden Teilbereichs ermittelt wird bzw. die Positionen der Teile des Datenabschnitts innerhalb der betreffenden Teilbereiche ermittelt werden,
- der Datenabschnitt aus dem Teilbereich gelesen und gegebenenfalls entschlüsselt wird bzw. die Teile des Datenabschnitts aus den Teilbereichen gelesen, gegebenenfalls entschlüsselt und zusammengefügt werden.

**11.** Verfahren nach Anspruch 10, **dadurch gekennzeichnet, dass** die Position des Datenabschnitts durch Ermittlung seiner Anfangs- und Endadresse festgestellt wird.

**12.** Verfahren nach Anspruch 11, **dadurch gekennzeichnet, dass** die Position des Datenabschnitts durch Ermittlung seiner Anfangsadresse und seiner Länge festgestellt wird.

**13.** Verfahren nach einem der Ansprüche 10 bis 12, **dadurch gekennzeichnet, dass** die Position des Datenabschnitts einer Adresstabelle entnommen wird.

**14.** Computerprogrammprodukt zur Ausführung des Verfahrens nach einem der Ansprüche 1 bis 9, wenn es auf einer programmtechnisch eingerichteten Datenverarbeitungseinrichtung abläuft.

**15.** Computerprogrammprodukt zur Ausführung des Verfahrens nach einem der Ansprüche 10 bis 13, wenn es auf einer programmtechnisch eingerichteten Datenverarbeitungseinrichtung abläuft.

**16.** Computerprogrammprodukt zur Ausführung des Verfahrens nach einem der Ansprüche 1 bis 9 und des Verfahrens nach einem der Ansprüche 10 bis 13, wenn es auf einer programmtechnisch eingerichteten Datenverarbeitungseinrichtung abläuft.

**17.** Programmtechnisch eingerichtete Datenverarbeitungseinrichtung, enthaltend ein Computerprogrammprodukt nach einem der Ansprüche 14 bis 16 zur Durchführung mindestens eines der Verfahren nach den Ansprüchen 1 bis 13, wenn das Computerprogrammprodukt abläuft.

**Europäisches Patentamt**

# EUROPÄISCHER RECHERCHENBERICHT

Nummer der Anmeldung

EP 03 02 5993

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 108 147 A (JEON YOUNG-IL)<br>22. August 2000 (2000-08-22)<br>* das ganze Dokument *<br>--- | 1,2,4,8,<br>14 | G11B20/12<br>G06F3/06 |
| X | US 6 104 555 A (NAM CHANG-WOO)<br>15. August 2000 (2000-08-15)<br>* das ganze Dokument *<br>--- | 1,2,5,14 | |
| X | PATENT ABSTRACTS OF JAPAN<br>vol. 2002, no. 09,<br>4. September 2002 (2002-09-04)<br>-& JP 2002 150708 A (SONY CORP),<br>24. Mai 2002 (2002-05-24)<br>* Zusammenfassung *<br>--- | 10-13,15 | |
| X | US 5 873 125 A (KAWAMOTO MASAKAZU)<br>16. Februar 1999 (1999-02-16)<br>* Zusammenfassung *<br>* Spalte 6, Zeile 10 - Spalte 9, Zeile 23 *<br>* Abbildungen 1-7 *<br>--- | 10,13,15 | **RECHERCHIERTE SACHGEBIETE (Int.Cl.7)** |
| X | US 5 987 565 A (GAVASKAR VIVEK N)<br>16. November 1999 (1999-11-16)<br>* Zusammenfassung *<br>* Spalte 3, Zeile 15 - Spalte 5, Zeile 22 *<br>* Abbildungen 1,2 *<br>----- | 10,15 | G11B<br>G06F |

Der vorliegende Recherchenbericht wurde für alle Patentansprüche erstellt

| Recherchenort | Abschlußdatum der Recherche | Prüfer |
|---|---|---|
| MÜNCHEN | 17. Juni 2004 | Sucher, R |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

**Europäisches**

**Patentamt**

Nummer der Anmeldung

EP 03 02 5993

## GEBÜHRENPFLICHTIGE PATENTANSPRÜCHE

Die vorliegende europäische Patentanmeldung enthielt bei ihrer Einreichung mehr als zehn Patentansprüche.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

**Europäisches
Patentamt**

**MANGELNDE EINHEITLICHKEIT
DER ERFINDUNG
ERGÄNZUNGSBLATT B**

**Nummer der Anmeldung**

EP 03 02 5993

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-9,14

   Verfahren zum Kopieren von Daten, wobei unterbrechungsfreie Teilbereiche gelesen und geschrieben werden

2. Ansprüche: 10-13,15-17

   Verfahren zur Verarbeitung von Daten, die in separat gespeicherte Teilbereiche aufgeteilt sind, wobei Daten aus den Teilbereichen gelesen und zusammengefügt werden

**ANHANG ZUM EUROPÄISCHEN RECHERCHENBERICHT**
**ÜBER DIE EUROPÄISCHE PATENTANMELDUNG NR.**　　　　EP 03 02 5993

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-06-2004

| Im Recherchenbericht angeführtes Patentdokument | | Datum der Veröffentlichung | Mitglied(er) der Patentfamilie | | Datum der Veröffentlichung |
|---|---|---|---|---|---|
| US 6108147 | A | 22-08-2000 | KR<br>CN<br>JP | 268461 B1<br>1174378 A ,B<br>10064170 A | 16-10-2000<br>25-02-1998<br>06-03-1998 |
| US 6104555 | A | 15-08-2000 | JP<br>JP | 2837155 B2<br>10208402 A | 14-12-1998<br>07-08-1998 |
| JP 2002150708 | A | 24-05-2002 | KEINE | | |
| US 5873125 | A | 16-02-1999 | JP | 7271513 A | 20-10-1995 |
| US 5987565 | A | 16-11-1999 | KEINE | | |

EPO FORM P0461

Für nähere Einzelheiten zu diesem Anhang : siehe Amtsblatt des Europäischen Patentamts, Nr.12/82